(19) Europäisches Patentamt / European Patent Office / Office européen des brevets

(11) **EP 3 264 411 B1**

(12) **EUROPEAN PATENT SPECIFICATION**

(45) Date of publication and mention of the grant of the patent:
**30.10.2019 Bulletin 2019/44**

(21) Application number: **16755703.2**

(22) Date of filing: **26.02.2016**

(51) Int Cl.:
*G10K 11/16* (2006.01)        *E04B 1/86* (2006.01)
*G10K 11/172* (2006.01)       *E04B 1/84* (2006.01)
*B60R 13/08* (2006.01)        *B29C 35/08* (2006.01)
*F16F 15/023* (2006.01)       *G10K 11/00* (2006.01)
*G10K 11/165* (2006.01)       *B29K 105/04* (2006.01)

(86) International application number:
**PCT/JP2016/055883**

(87) International publication number:
**WO 2016/136959 (01.09.2016 Gazette 2016/35)**

(54) **SOUNDPROOF STRUCTURE AND METHOD FOR MANUFACTURING SOUNDPROOF STRUCTURE**

SCHALLDICHTE STRUKTUR UND VERFAHREN ZUR HERSTELLUNG EINER SCHALLDICHTEN STRUKTUR

STRUCTURE D'INSONORISATION ET SON PROCÉDÉ DE FABRICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.02.2015 JP 2015039481**

(43) Date of publication of application:
**03.01.2018 Bulletin 2018/01**

(73) Proprietor: **FUJIFILM Corporation Tokyo 106-8620 (JP)**

(72) Inventors:
• **YAMAZOE Shogo**
  **Ashigara-kami-gun**
  **Kanagawa 258-8577 (JP)**
• **HAKUTA Shinya**
  **Ashigara-kami-gun**
  **Kanagawa 258-8577 (JP)**
• **KASAMATSU Tadashi**
  **Ashigara-kami-gun**
  **Kanagawa 258-8577 (JP)**
• **NAYA Masayuki**
  **Ashigara-kami-gun**
  **Kanagawa 258-8577 (JP)**

(74) Representative: **Klunker IP Patentanwälte PartG mbB Destouchesstraße 68 80796 München (DE)**

(56) References cited:
JP-A- 2005 031 240        JP-A- 2005 250 474
JP-A- 2008 207 763        JP-A- 2009 139 556
JP-A- 2010 026 258        US-A- 4 257 998
US-A1- 2011 240 402       US-A1- 2018 082 668

**Description**

**BACKGROUND OF THE INVENTION**

1. Field of the Invention

The present invention relates to a soundproof structure and a soundproof structure manufacturing method, and more particularly to a soundproof structure that is formed by one soundproof cell, in which a frame and a film fixed to the frame are integrally formed, or formed by arranging a plurality of soundproof cells in a two-dimensional manner and that is for strongly shielding the sound of a target frequency selectively, and a soundproof structure manufacturing method for manufacturing such a soundproof structure.

2. Description of the Related Art

In the case of a general sound insulation material, as the mass increases, the sound is shielded better. Accordingly, in order to obtain a good sound insulation effect, the sound insulation material itself becomes large and heavy. On the other hand, in particular, it is difficult to shield the sound of low frequency components. In general, this region is called a mass law, and it is known that the shielding increases by 6 dB as the frequency doubles.

Thus, most conventional soundproof structures are disadvantageous in that the soundproof structures are large and heavy due to sound insulation by the mass of the structures and that it is difficult to shield low frequencies.

On the other hand, a soundproof structure in which the stiffness of a member is enhanced by laminating a frame on a sheet or a film has been reported (refer to JP4832245B and US7395898B (corresponding Japanese Patent Application Publication: JP2005-250474A). With this structure, it is possible to realize a soundproof structure using a soundproof member that is lighter and thinner than a conventional one.

In the case of the soundproof structures disclosed in JP4832245B and US7395898B (corresponding Japanese Patent Application Publication: JP2005-250474A), the principle of sound insulation is a stiffness law different from the mass law described above. Accordingly, low frequency components can be shielded even with a thin structure. This region is called a stiffness law, and sound insulation is performed by fixing film vibration at a frame portion.

JP4832245B discloses a sound absorber that has a frame body, which has a through opening formed therein, and a sound absorbing material, which covers one opening of the through opening and whose storage modulus is within a specific range (refer to abstract, claim 1, paragraphs [0005] to [0007] and [0034], and the like). The storage modulus of the sound absorbing material means a component, which is internally stored, of the energy generated in the sound absorbing material by sound absorption.

In JP4832245B, as a frame body, a material having a low specific gravity, such as resin, is preferably considered from the viewpoint of weight saving (refer to paragraph [0019]). In the embodiment, an acrylic resin is used (refer to paragraph [0030]). As a sound absorbing material, it is considered that a thermoplastic resin can be used (refer to paragraph [0022]). In the embodiment, a sound absorbing material in which a resin or a mixture of a resin and a filler is a formulation material is used (refer to paragraphs [0030] to [0034]). Therefore, it is possible to achieve a high sound absorption effect in a low frequency region without causing an increase in the size of the sound absorber.

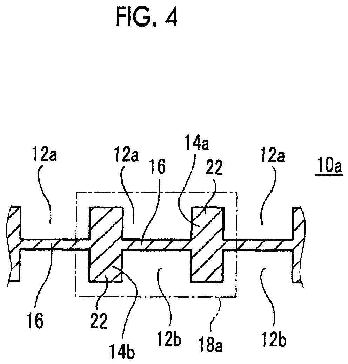

In addition, US7395898B (corresponding Japanese Patent Application Publication: JP2005-250474A) discloses a sound attenuation panel including an acoustically transparent two-dimensional rigid frame divided into a plurality of individual cells, a sheet of flexible material fixed to the rigid frame, and a plurality of weights, and a sound attenuation structure (refer to claims 1, 12, and 15, Fig. 4, page 4, and the like). In the sound attenuation panel, the plurality of individual cells are approximately two-dimensional cells, each weight is fixed to the sheet of flexible material so that the weight is provided in each cell, and the resonance frequency of the sound attenuation panel is defined by the two-dimensional shape of each individual cell, the flexibility of the flexible material, and each weight thereon.

In JP4832245B, as a rigid frame, a material, such as aluminum or plastic, is used from the viewpoint that it is preferable that the material is a support material and is sufficiently rigid and light. As a flexible material, any suitable soft material, such as an elastic material including rubber or nylon, is used. Therefore, a sound attenuation panel that is very thin and light and that can insulate sound at low frequencies can be easily and inexpensively manufactured (refer to page 5, line 65 to page 6, line 5).

JP 2005 031240 A discloses a soundproof structure with the features of the preamble of claim 1, shaped as a panel arranged in front of a rigid wall at a specified interval. Plural hole parts are formed within the panel, each hole part comprising a large part exposed on one surface side of the panel and a small hole part.

US 4 257 998 A discloses a layered structure in which a perforated intermediate layer is included in a multilayer structure.

US 2011/240402 A1 discloses a sound isolation unit including a panel with plural isolation structures which are separated by a specific distance, the distance being designed so as to avoid interference of the adjacent unit by the panel.

## SUMMARY OF THE INVENTION

Incidentally, the soundproof structures formed of the conventional film-like soundproof member disclosed in JP4832245B and US7395898B (corresponding Japanese Patent Application Publication: JP2005-250474A) are structures in which a film and a frame formed of different materials are bonded to each other with an adhesive.

In such a configuration, however, there is a problem that peeling of the frame and the film due to environmental changes or temporal deterioration and change of the soundproof characteristic occur due to differences in the three physical properties (thermal expansion coefficient, stiffness, and the like).

Generally, also in manufacturing, it is a difficult work to uniformly apply an adhesive layer onto the thin frame and uniformly bond the film to the adhesive layer. For this reason, also in the manufacturing of a soundproof structure, there is a problem that the fixing of the film and the frame using an adhesive is not preferable.

An object of the present invention is to overcome the aforementioned problems of the conventional techniques, and it is an object of the present invention to provide a soundproof structure and a soundproof structure manufacturing method capable of not only stably insulating sound due to increased resistance to environmental change or aging by integrally forming a film and a frame using the same material but also avoiding problems in manufacturing, such as uniform adhesion or bonding of a film to a frame.

Another object of the present invention is to provide a soundproof structure which is light and thin, in which sound insulation characteristics such as a shielding frequency and a shielding size do not depend on the position and shape of the through hole, which has high robustness as a sound insulation material and is stable, which has air permeability so that wind and heat can pass therethrough and accordingly has no heat thereinside, which is suitable for equipment, automobiles, and household applications, and which is excellent in manufacturability, and a soundproof structure manufacturing method capable of reliably and easily manufacturing such a soundproof structure.

In order to achieve the aforementioned object, a soundproof structure of the present invention is a soundproof structure comprising one or more soundproof cells. Each of the one or more soundproof cells comprises a frame having a hole portion, a vibratable film fixed to the frame so as to cover the hole portion, and one or more through holes drilled in the film. Both end portions of the hole portion of the frame are not closed, and the frame and the film are formed of the same material and are integrally formed.

The one or more soundproof cells are a plurality of soundproof cells arranged in a two-dimensional manner without spacing.

The soundproof structure further comprises a weight disposed in the film, and wherein the weight is formed of the same material as the film and is integrally formed.

It is preferable that the soundproof structure has a shielding peak frequency, which is determined by the opening portions of the one or more soundproof cells and at which transmission loss is maximized, on a lower frequency side than a resonance frequency of the films of the one or more soundproof cells, and selectively insulates sound in a predetermined frequency band having the shielding peak frequency at its center.

In order to achieve the aforementioned object, a soundproof structure manufacturing method of the present invention comprises the features of claim 3.

Here, it is provided a weight in the film, wherein the weight is integrally molded in the film.

It is preferable that one or more through holes are drilled in the film of each of the one or more soundproof cells using a processing method for absorbing energy or a mechanical processing method based on physical contact.

According to the present invention, it is possible not only to stably insulate sound due to increased resistance to environmental change or aging by integrally forming the film and the frame using the same material but also to avoid problems in manufacturing, such as uniform adhesion or bonding of the film to the frame.

In addition, according to the present invention, by drilling one or more through holes in the film, it is possible to provide a soundproof structure which is light and thin, in which sound insulation characteristics such as a shielding frequency and a shielding size do not depend on the position and shape of the through hole, which has high robustness as a sound insulation material and is stable, which has air permeability so that wind and heat can pass therethrough and accordingly has no heat thereinside, which is suitable for equipment, automobiles, and household applications, and which is excellent in manufacturability.

In addition, according to the present invention, it is possible to reliably and easily manufacture such a soundproof structure.

## BRIEF DESCRIPTION OF THE DRAWINGS

Fig. 1A is a perspective view schematically showing an example of a soundproof structure according to a first embodiment not covered by the present invention, and Fig. 1B is a schematic partial cross-sectional view of the soundproof structure shown in Fig. 1A.

Fig. 2 is a graph showing a transmission loss sound insulation characteristic with respect to a frequency of the soundproof structure shown in Figs. 1A and 1B.

Fig. 3A is a graph showing a resonance frequency with respect to the hole portion radius of the soundproof structure shown in Figs. 1A and 1B, and Fig. 3B is a graph showing a first shielding peak frequency with respect to the hole portion radius of the soundproof structure shown in Figs. 1A and 1B.

Fig. 4 is a partial cross-sectional view schematically showing an example of a soundproof structure according to a second embodiment not covered by the present invention.

Fig. 5A is a perspective view schematically showing an example of a soundproof structure according to a third embodiment not covered by the present invention, and Fig. 5B is a schematic partial cross-sectional view of the soundproof structure shown in Fig. 5A.

Fig. 6A is a perspective view schematically showing an example of a soundproof structure according to a fourth embodiment not covered by the present invention, and Fig. 6B is a schematic partial cross-sectional view of the soundproof structure shown in Fig. 6A.

Fig. 7 is a graph showing a transmission loss sound insulation characteristic with respect to a frequency of the soundproof structure shown in Figs. 6A and 6B.

Fig. 8A is a graph showing a resonance frequency with respect to the weight radius of the soundproof structure shown in Figs. 6A and 6B, and Fig. 8B is a graph showing a first shielding peak frequency with respect to the weight radius of the soundproof structure shown in Figs. 6A and 6B.

Fig. 9A is a perspective view schematically showing an example of a soundproof structure according to a fifth embodiment not covered by the present invention, and Fig. 9B is a schematic partial cross-sectional view of the soundproof structure shown in Fig. 9A.

Fig. 10 is a graph showing a transmission loss sound insulation characteristic with respect to a frequency of the soundproof structure shown in Figs. 9A and 9B.

Fig. 11A is a graph showing a resonance frequency with respect to the through hole radius of the soundproof structure shown in Figs. 9A and 9B, and Fig. 11B is a graph showing a first shielding peak frequency with respect to the through hole radius of the soundproof structure shown in Figs. 9A and 9B.

Figs. 12A, 12B, and 12C are partial cross-sectional views schematically showing examples of respective steps of a soundproof structure manufacturing method according to a sixth embodiment not covered by the present invention.

Fig. 13 is a partial cross-sectional view schematically showing an example of a soundproof structure manufacturing method according to a seventh embodiment of the present invention.

Fig. 14 is a graph showing a first shielding peak frequency with respect to a parameter A of the soundproof structure of the present invention.

Fig. 15 is a graph showing a resonance frequency with respect to a parameter B of the soundproof structure of the present invention.

## DESCRIPTION OF THE PREFERRED EMBODIMENTS

Hereinafter, a soundproof structure and a soundproof structure manufacturing method according to the present invention will be described in detail with reference to preferred embodiments shown in the accompanying diagrams.

First, the soundproof structure according to the present invention will be described.

(First embodiment)

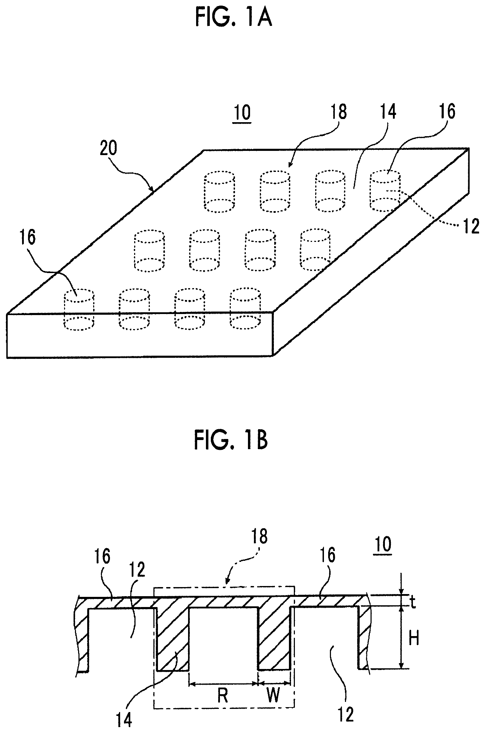

Fig. 1A is a perspective view schematically showing an example of a soundproof structure according to a first embodiment not covered by the present invention, and Fig. 1B is a schematic cross-sectional view of the soundproof structure shown in Fig. 1A.

A soundproof structure 10 according to the present embodiment shown in Figs. 1A and 1B has a structure in which soundproof cells 18, each of which has a frame 14 having a hole portion 12 and a vibratable film 16 fixed to the frame 14 so as to cover the hole portion 12, are arranged in a two-dimensional manner.

In the soundproof structure 10, the frame 14 and the film 16 are formed of the same material, and are integrally formed.

The soundproof structure 10 of the illustrated example is formed by a plurality of, that is, twelve soundproof cells 18. However, the present invention is not limited thereto, and may be formed by one soundproof cell 18 configured to include one frame 14, one film 16, and one or more through holes.

In the soundproof structure 10 of the illustrated example, a plurality of (12) hole portions 12 are provided in a quadrangular plate-shaped soundproof member 20 having a predetermined thickness, and the frame 14 of each soundproof cell 18 is formed by a portion surrounding each hole portion 12.

Since the frame 14 is formed so as to annularly surround the hole portion 12 and fixes and supports the film 16 so as to cover the hole portion 12, the frame 14 serves as a node of film vibration of the film 16 fixed to the frame 14.

Accordingly, each of the plurality of films 16 is formed as a closed end on the opposite side of the open end of each hole portion 12.

In the illustrated example, the plurality of frames 14 are formed as one frame body, and the frame body is formed by the plate-shaped soundproof member 20 excluding the plurality of hole portions 12 and the plurality of films 16.

Thus, the soundproof structure 10 has a structure in which a plurality of hole portions 12 and a plurality of films 16 are integrated.

It is preferable that the frame 14 has a closed continuous shape capable of fixing the film 16 so as to restrain the entire periphery of the film 16. However, the present invention is not limited thereto, and the frame 14 may be made to have a discontinuous shape by cutting a part thereof as long as the frame 14 serves as a node of film vibration of the film 16 fixed to the frame 14. That is, since the role of the frame 14 is to fix and support the film 16 to control the film vibration, the effect is achieved even if there are small cuts in the frame 14 or even if there are very slightly unbonded parts.

The shape of the hole portion 12 of the frame 14 is a planar shape, and is a circular shape in the example shown in Fig. 1. In the present invention, however, the shape of the hole portion 12 of the frame 14 is not particularly limited. For example, the shape of the hole portion 12 of the frame 14 may be a quadrangle such as a rectangle, a diamond, or a parallelogram, a triangle such as an equilateral triangle, an isosceles triangle, or a right triangle, a polygon including a regular polygon such as a regular pentagon or a regular hexagon, an elliptical shape, and the like, or may be an irregular shape.

The size of the frame 14 is a size in plan view, and can be defined as the size of the hole portion 12. Accordingly, in the following description, the size of the frame 14 is the size of the hole portion 12. However, in the case of a regular polygon such as a circle or a square shown in Fig. 1A, the size of the frame 14 can be defined as a distance between opposite sides passing through the center or as a circle equivalent diameter. In the case of a polygon, an ellipse, or an irregular shape, the size of the frame 14 can be defined as a circle equivalent diameter. In the present invention, the circle equivalent diameter and the radius are a diameter and a radius at the time of conversion into circles having the same area.

In the soundproof structure 10 according to the present embodiment, the size of the hole portion 12 of the frame 14 may be fixed in all hole portions 12. However, frames having different sizes (including a case where shapes are different) may be included. In this case, the average size of the hole portions 12 may be used as the size of the hole portion 12.

The size of the hole portion 12 of the frame 14 is not particularly limited, and may be set according to a soundproofing target to which the soundproof structure 10 of the present invention is applied for soundproofing, for example, a copying machine, a blower, air conditioning equipment, a ventilator, a pump, a generator, a duct, industrial equipment including various kinds of manufacturing equipment capable of emitting sound such as a coating machine, a rotary machine, and a conveyor machine, transportation equipment such as an automobile, a train, and aircraft, and general household equipment such as a refrigerator, a washing machine, a dryer, a television, a copying machine, a microwave oven, a game machine, an air conditioner, a fan, a PC, a vacuum cleaner, and an air purifier.

The soundproof structure 10 itself can be used like a partition in order to shield sound from a plurality of noise sources. Also in this case, the size of the frame 14 can be selected from the frequency of the target noise.

For example, although the size R of the hole portion 12 shown in Fig. 1B is not particularly limited, the size R of the hole portion 12 shown in Fig. 1B is preferably 0.5 mm to 200 mm, more preferably 1 mm to 100 mm, and most preferably 2 mm to 30 mm.

The size of the frame 14 is preferably expressed by an average size, for example, in a case where different sizes are included in each frame 14.

In the present invention, the width of the frame 14 can be defined as a distance between the two adjacent films 16. However, in a case where the shape of the hole portion 12 is a circle shown in Fig. 1A, the width of the frame 14 may be defined as the closest distance, or may be defined as an average distance.

In addition, the width and the thickness of the frame 14 are not particularly limited as long as the film 16 can be reliably fixed so that the film 16 can be reliably supported. For example, the width and the thickness of the frame 14 can be set according to the size of the hole portion 12.

For example, as shown in Fig. 1B, in a case where the size of the hole portion 12 is 0.5 mm to 50 mm, the width W of the frame 14 is preferably 0.5 mm to 20 mm, more preferably 0.7 mm to 10 mm, and most preferably 1 mm to 5 mm.

In a case where the size of the hole portion 12 exceeds 50 mm and is equal to or less than 200 mm, the width W of the frame 14 is preferably 1 mm to 100 mm, more preferably 3 mm to 50 mm, and most preferably 5 mm to 20 mm.

In addition, as shown in Fig. 1B, the thickness H of the frame 14, that is, the hole portion 12, is preferably 0.5 mm to 200 mm, more preferably 0.7 mm to 100 mm, and most preferably 1 mm to 50 mm.

It is preferable that the width and the thickness of the frame 14 are expressed by an average size, for example, in a case where different widths and thicknesses are included in each frame 14.

The number of frames 14 of the soundproof structure 10 of the present invention, that is, the number of hole portions 12 in the illustrated example, is not particularly limited, and may be set according to the above-described soundproofing target of the soundproof structure 10 of the present invention. Alternatively, since the size of the hole portion 12 described above is set according to the above-described soundproofing target, the number of hole portions 12 of the frame 14 may be set according to the size of the hole portion 12.

For example, in the case of in-device noise shielding, the number of frames 14 is preferably 1 to 10000, more preferably 2 to 5000, and most preferably 4 to 1000.

The reason is as follows. For the size of general equipment, the size of the equipment is fixed. Accordingly, in order to make the size of one soundproof cell 18 suitable for the frequency of noise, it is often necessary to perform shielding with a frame body obtained by combining a plurality of soundproof cells 18. In addition, by increasing the number of soundproof cells 18 too much, the total weight is increased by the weight of the frame 14. On the other hand, in a structure such as a partition that is not limited in size, it is possible to freely select the number of frames 14 according to the required overall size.

In addition, since one soundproof cell 18 has one frame 14 as a constitutional unit, the number of frames 14 of the soundproof structure 10 of the present invention can be said to be the number of soundproof cells 18.

Since the film 16 is fixed so as to be restrained by the frame 14 so as to cover the hole portion 12 inside the frame 14, the film 16 vibrates in response to sound waves from the outside. By absorbing the energy of sound waves, the sound is insulated. For this reason, it is preferable that the film 16 is impermeable to air.

Incidentally, since the film 16 needs to vibrate with the frame 14 as a node, it is necessary that the film 16 is fixed to the frame 14 so as to be reliably restrained by the frame 14 and accordingly becomes an antinode of film vibration, thereby absorbing the energy of sound waves to insulate sound.

For this reason, it is preferable that the film 16 is formed of a flexible elastic material. Therefore, the shape of the film 16 is the shape of the hole portion 12 of the frame 14. In addition, the size of the film 16 is the size of the hole portion 12. More specifically, the size of the film 16 can be said to be the size of the hole portion 12 of the frame 14.

The thickness of the film 16 is not particularly limited as long as the film can vibrate by absorbing the energy of sound waves to insulate sound. However, it is preferable to make the film 16 thick in order to obtain a natural vibration mode on the high frequency side and thin in order to obtain the natural vibration mode on the low frequency side. For example, the thickness of the film 16 can be set according to the size of the hole portion 12, that is, the size of the film 16 in the present invention.

For example, as shown in Fig. 1B, in a case where the size R of the hole portion 12 is 0.5 mm to 50 mm, the thickness t of the film 16 is preferably 0.005 mm (5 $\mu$m) to 5 mm, more preferably 0.007 mm (7 $\mu$m) to 2 mm, and most preferably 0.01 mm (10 $\mu$m) to 1 mm.

In a case where the size of the hole portion 12 exceeds 50 mm and is equal to or less than 200 mm, the thickness t of the film 16 is preferably 0.01 mm (10 $\mu$m) to 20 mm, more preferably 0.02 mm (20 $\mu$m) to 10 mm, and most preferably 0.05 mm (50 $\mu$m) to 5 mm.

The thickness of the film 16 is preferably expressed by an average thickness, for example, in a case where the thickness of one film 16 is different or in a case where different thicknesses are included in each film 16.

The frame 14 and the film 16 are formed of the same material. Accordingly, materials of the frame 14 and the film 16 are not particularly limited as long as it is possible to form the film 16 capable of performing the required function described above and it is possible to form the frame 14 capable of performing the required function described above, and can be selected according to a soundproofing target and the soundproof environment. The materials of the frame 14 and the film 16 can be formed in a film shape, such as a thin film or sheet. When the materials of the frame 14 and the film 16 are formed in a film shape, a function as the above-described film 16 that can vibrate and reflects or absorbs the energy of sound waves is realized. In addition, it is possible to provide a soundproof member having a plurality of hole portions 12 with a predetermined thickness. When the frame 14 having the hole portion 12 is formed, as described above, the frame 14 has strength and durability for supporting and fixing the film 16 so as to be able to vibrate, and functions as a node of the film vibration of the film 16.

As such materials, for example, metal materials such as aluminum, steel, titanium, magnesium, tungsten, iron, chromium, chromium molybdenum, nichrome molybdenum and alloys thereof, acrylic resins such as polymethyl methacrylate (PMMA), resin materials such as polyethylene terephthalate (PET), polycarbonate, polyamideide, polyarylate, polyether imide, polyacetal, polyether ether ketone, polyphenylene sulfide, polysulfone, polybutylene terephthalate, polyimide, and triacetyl cellulose, materials containing carbon fibers such as carbon fiber reinforced plastic (CFRP), carbon fiber, glass fiber reinforced plastic (GFRP), and inorganic materials such as glass, sapphire, ceramics can be mentioned.

A plurality of materials of the frame 14 may be used in combination.

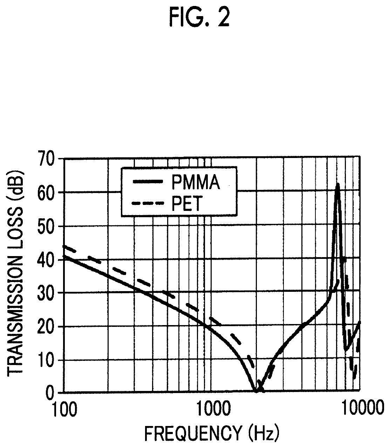

Here, as shown in Fig. 2, the film 16 fixed to the frame 14 of the soundproof cell 18 has a resonance frequency at which the transmission loss is minimum, for example, 0 dB. The resonance frequency is a frequency of the lowest order natural vibration mode. In the present invention, the resonance frequency is determined by the soundproof structure 10 configured to include the frame 14 and the film 16.

Fig. 2 shows a simulation result of sound insulation performance when a plane wave is incident on the single soundproof cell 18 of the present embodiment based on a finite element method (FEM). The soundproof structure 10 of the member in this simulation has the soundproof cell 18 in which the hole portion 12 of the frame 14 has a circular shape with a radius (R) of 5 mm, both the thickness (H) and the width (W) of the frame 14 having the hole portion 12 are 3 mm, and the thickness (t) of the film 16 covering the hole portion 12 is 50 $\mu$m.

As can be seen from Fig. 2 which is a simulation result in a case where the soundproof member of the soundproof structure 10 having such a configuration is PMMA, there is a significant point with a very small transmission loss at 2000 Hz. At this frequency, since the first vibration mode of the film 16 and the sound wave resonate, a high transmittance is obtained. Therefore, the transmission loss is significantly reduced.

That is, the resonance frequency of the film 16, which is fixed so as to be restrained by the frame 14, in the structure configured to include the frame 14 and the film 16 is a frequency of natural vibration mode, in which sound waves are largely transmitted at the frequency when the sound waves cause film vibration most.

A simulation method of sound insulation performance based on the FEM will be described later.

Therefore, the soundproof structure 10 according to the present embodiment has a frequency region according to the stiffness law and a frequency region according to the mass law. Since the boundary is a resonance frequency, the resonance frequency of the soundproof structure 10, that is, the resonance frequency of the film 16 fixed to the frame 14 is preferably 10 Hz to 100000 Hz corresponding to the sound wave sensing range of human beings, more preferably 20 Hz to 20000 Hz that is an audible range of sound waves of human beings, even more preferably 40 Hz to 16000 Hz, and most preferably 100 Hz to 12000 Hz.

In the soundproof structure 10 of the present invention, the resonance frequency of the film 16 in the structure configured to include the frame 14 and the film 16 can be determined by the geometric form of the frame 14 of a plurality of soundproof cells 18, for example, the shape and size of the frame 14, and the stiffness of the film of the plurality of soundproof cells, for example, thickness and flexibility of the film.

As a parameter characterizing the natural vibration mode of the film 16, in the case of the film 16 of the same material, a ratio between the thickness (t) of the film 16 and the square of the size (R) of the hole portion 12 can be used. For example, in the case of a square, a ratio [$R^2/t$] between the size of one side and the square of the size (R) of the hole portion 12 can be used. In a case where the ratio [$R^2/t$] is the same, the natural vibration mode is the same frequency, that is, the same resonance frequency. That is, by setting the ratio [$R^2/t$] to a fixed value, the scale law is established. Accordingly, an appropriate size can be selected.

As can be seen from Fig. 2, on the lower frequency side than the resonance frequency, the sound insulation performance improves as the frequency decreases. This is a sound insulation characteristic due to the stiffness of the member of the soundproof structure 10 according to the present embodiment, and is caused by increasing the stiffness by fixing the frame 14 to the film 16.

On the other hand, on the higher frequency side than the resonance frequency, the sound insulation performance improves as the frequency increases. This is due to the mass of the soundproof member 20 of the soundproof structure 10, and the sound insulation performance improves as the soundproof member 20 becomes heavy. In this region, a very sharp sound insulation peak is present at 7079 Hz, which is caused by adding a frame to the film. It can be seen that, even if the soundproof member 20 of the soundproof structure 10 is changed from PMMA to PET, similar sound insulation performance can be obtained as shown in Fig. 2.

That is, as shown in Fig. 2, in the film 16 of the soundproof structure 10 according to the present embodiment, a shielding peak of the sound wave whose transmission loss is a peak (maximum) appears at the first shielding peak frequency on the higher frequency side than the resonance frequency.

Accordingly, in the soundproof structure 10 of the present invention, the shielding (transmission loss) becomes a peak (maximum) at the first shielding peak frequency. As a result, it is possible to selectively insulate sound in a predetermined frequency band having the first shielding peak frequency at its center.

In the measurement of the acoustic characteristics shown in Fig. 2, the transmission loss (dB) in the soundproof structure of the present invention was measured as follows.

The acoustic characteristics were measured by a transfer function method using four microphones in a self-made aluminum acoustic tube. This method is based on "ASTM E2611-09: Standard Test Method for Measurement of Normal Incidence Sound Transmission of Acoustical Materials Based on the Transfer Matrix Method". As the acoustic tube, for example, an acoustic tube based on the same measurement principle as WinZac manufactured by Nitto Bosei Aktien Engineering Co., Ltd. was used. It is possible to measure the sound transmission loss in a wide spectral band using this method. The soundproof structure 10 according to the present embodiment was disposed in a measurement portion of the acoustic tube, and the sound transmission loss was measured in the range of 100 Hz to 10000 Hz. The result is shown in Fig. 2.

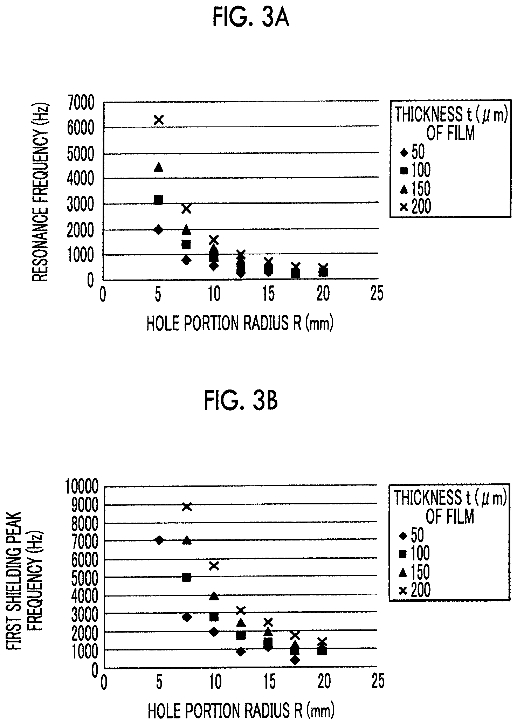

Figs. 3A and 3B show a resonance frequency and a frequency of the first sound insulation peak when the radius (R) of the hole portion 12 of the frame 14 of the soundproof structure 10 and the thickness (t) of the film 16 are changed. The soundproof member of the soundproof structure 10 according to the present embodiment is PMMA, the thickness (H) of the frame 14 is 3 mm, and the width (W) is 3 mm.

As shown in Figs. 3A and 3B, by changing the radius (R) of the hole portion 12 and the thickness (t) of the film 16, it is possible to change the resonance frequency and the frequency of the first sound insulation peak over a wide band In the audible range (50 Hz to 20 kHz). In a case where it is necessary to insulate sound on the low frequency side in a wide band, it is preferable to have a structure that shifts the resonance frequency to the high frequency side. In a case where it is necessary to highly insulate sound in a specific band, it is preferable to have a structure that matches the first sound insulation peak to the frequency.

Thus, in the soundproof structure 10 according to the present embodiment, by appropriately setting the radius (R) of the hole portion 12 and the thickness (t) of the film 16, it is possible to selectively insulate sound in a required specific frequency band to realize soundproofing.

In addition, the soundproof structure 10 according to the present embodiment having a configuration in which the film 16 and the frame 14 are integrated can be manufactured by simple processing, such as compression molding, injection molding, imprinting, scraping processing, and a processing method using a three-dimensional shaping (3D) printer.

Basically, the soundproof structure according to the present embodiment is configured as described above.

(Second embodiment)

Fig. 4 is a partial cross-sectional view schematically showing an example of a soundproof structure according to a second embodiment not covered by the present invention.

A soundproof structure 10a according to the present embodiment shown in Fig. 4 has a structure in which a film 16 is disposed in the middle of a frame 22, accordingly, between a frame 14a on the upper side of the diagram and a frame 14b on the lower side of the diagram in the frame 22, and has hole portions 12a and 12b on both sides of the film 16. Therefore, a soundproof cell 18a is configured to include the frame 22, which is formed by the frame 14a having the hole portion 12a and the frame 14b having the hole portion 12b, and the film 16 disposed between the hole portions 12a and 12b.

Here, the soundproof structure 10a according to the present embodiment shown in Fig. 4 is different from the soundproof structure 10 of the first embodiment shown in Figs. 1A and 1B in that the film 16 is disposed between the frames 14a and 14b of the frame 22, that is, between the hole portions 12a and 12b. However, the soundproof structure configured to include the film 16 and the frame 14a, which has the hole portion 12a of the frame 22, and the soundproof structure configured to include the film 16 and the frame 14b, which has the hole portion 12b of the frame 22, can be regarded as having the same configuration as the soundproof structure 10 of the first embodiment shown in Figs. 1A and 1B in which the film 16 is disposed on one side of the frame 14 so as to cover one side of the hole portion 12. Therefore, the detailed explanation thereof will be omitted.

Since the soundproof structure 10a according to the present embodiment has such a configuration, the film 16 can be more firmly fixed, which is preferable.

The film 16 may be fixed to the frame 14 so as to cover at least one side of hole portion 12 of the frame 14. That is, the film 16 may be fixed to the frame 14 so as to cover openings on one side, the other side, or both sides of the hole portion 12 of the frame 14.

Here, all the films 16 may be provided on the same side of the hole portions 12 of the plurality of frames 14 of the soundproof structure 10. Alternatively, some of the films 16 may be provided on one side of each of some of the hole portions 12 of the plurality of frames 14, and the remaining films 16 may be provided on the other side of each of the remaining some hole portions 12 of the plurality of frames 14. Furthermore, films provided on one side, the other side, and both sides of the hole portion 12 of the frame 14 may be mixed.

(Third embodiment)

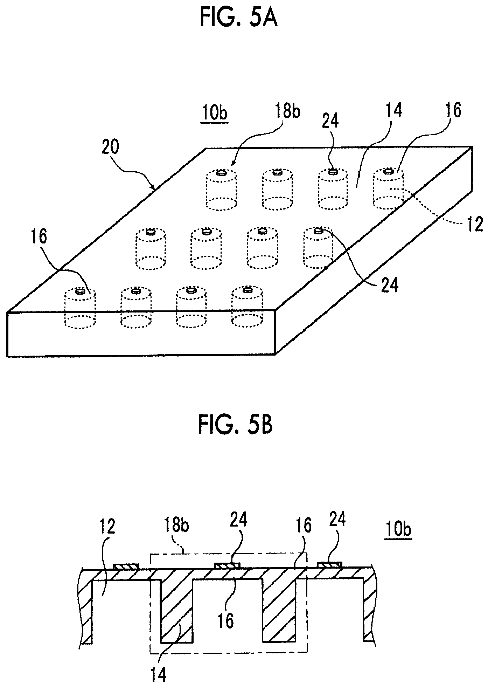

Fig. 5A is a perspective view schematically showing an example of a soundproof structure according to a third embodiment not covered by the present invention, and Fig. 5B is a schematic partial cross-sectional view of the soundproof structure shown in Fig. 5A.

A soundproof structure 10b according to the present embodiment shown in Figs. 5A and 5B has a structure in which soundproof cells 18b, each of which has a frame 14 having a hole portion 12, a film 16 fixed to the frame 14, and a weight 24 attached and fixed to the film 16, are arranged in a two-dimensional manner.

The soundproof structure 10b shown in Figs. 5A and 5B has the same configuration as the soundproof structure 10 of the first embodiment shown in Figs. 1A and 1B except that the weight 24 is attached and fixed to the film 16. Accordingly, the explanation of the same configuration will be omitted.

In the soundproof structure 10b according to the present embodiment, the weight 24 is attached and fixed to the film 16 in order to improve the controllability of sound insulation performance compared with a soundproof structure having no weight as in the soundproof structure 10 of the first embodiment and the soundproof structure 10a of the second embodiment shown in Fig. 4.

That is, by changing the weight of the weight 24, it is possible to control the frequency of the first sound insulation peak and the sound insulation characteristic.

The shape of the weight 24 is not limited to the circular shape in the illustrated example, and can be the above-described various shapes similarly to the shape of the hole portion 12 of the frame 14, accordingly, the shape of the film 16. However, it is preferable that the shape of the weight 24 is the same as the shape of the film 16.

The size of the weight 24 is not particularly limited, but the size of the weight 24 is required to be smaller than the size of the film 16 that is the size of the hole portion 12. Accordingly, in a case where the size R of the hole portion 12 is 0.5 mm to 50 mm, the size of the weight 24 is preferably 0.01 mm to 25 mm, more preferably 0.05 mm to 10 mm, and most preferably 0.1 mm to 5 mm.

The thickness of the weight 24 is not particularly limited, and may be appropriately set according to the required weight and the size of the weight 24. For example, the thickness of the weight 24 is preferably 0.01 mm to 10 mm, more preferably 0.1 mm to 5 mm, and most preferably 0.5 mm to 2 mm.

It is preferable that the size and/or thickness of the weight 24 is expressed by an average size and/or average thickness, for example, in a case where different sizes and/or thicknesses are included in a plurality of films 16.

The material of the weight 24 is not particularly limited as long as the material of the weight 24 has a required weight and a required size, and the various materials described above can be used similarly to the materials of the frame 14 and the film 16. The material of the weight 24 may be the same as or different from the materials of the frame 14 and the film 16.

For example, in a case where the weight 24 is provided in the soundproof structure 10 of the first embodiment showing the sound insulation characteristic (acoustic characteristic) shown in Fig. 2. For example, iron having a thickness of 1 mm and a radius of 1.5 mm can be used as the weight 24.

(Fourth embodiment)

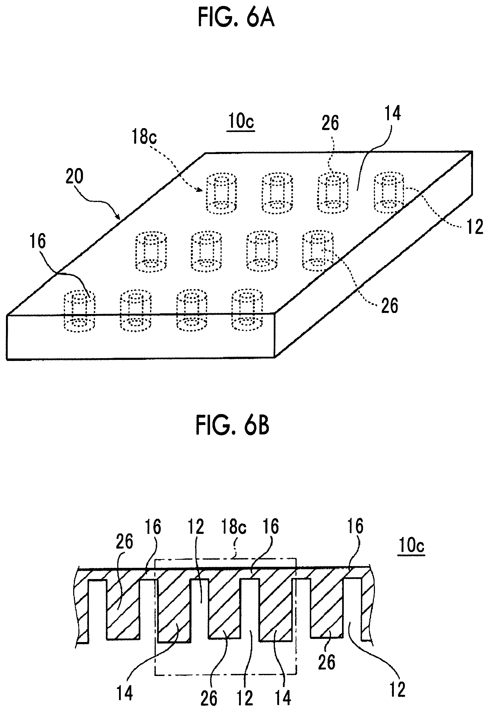

Fig. 6A is a perspective view schematically showing an example of a soundproof structure according to a fourth embodiment not covered by the present invention, and Fig. 6B is a schematic partial cross-sectional view of the soundproof structure shown in Fig. 6A.

A soundproof structure 10c according to the present embodiment shown in Figs. 6A and 6B has a structure in which soundproof cells 18c, each of which has a frame 14 having a hole portion 12, a film 16 fixed to the frame 14, and a weight 26 disposed on the film 16, are arranged in a two-dimensional manner.

The soundproof structure 10c shown in Figs. 6A and 6B has a weight on the film 16 similarly to the soundproof structure 10b shown in Figs. 5A and 5B. However, the soundproof structure 10c shown in Figs. 6A and 6B is different from the soundproof structure 10b shown in Figs. 5A and 5B in that the weight 26 of the soundproof structure 10c according to the present embodiment is integrally formed of the same material as the frame 14 and the film 16 while the weight 24 of the soundproof structure 10b is attached and fixed to the film 16. Other than that, the soundproof structure 10c shown in Figs. 6A and 6B has the same configuration as the soundproof structure 10b shown in Figs. 5A and 5B. Accordingly, the explanation of the same configuration will be omitted.

In the soundproof structure 10c according to the present embodiment, since the weight 26 is integrally formed of the same material as the frame 14 and the film 16, it is possible to firmly fix the weight 26 and the film 16. Therefore, it is possible to prevent the weight 26 from peeling off from the film 16.

In addition, the soundproof structure 10c according to the present embodiment can be manufactured by simple processing, such as compression molding, injection molding, imprinting, scraping processing, and a processing method using a three-dimensional shaping (3D) printer, as described above with no need to attach the weight 26 to the film 16 unlike in the soundproof structure 10b of the third embodiment.

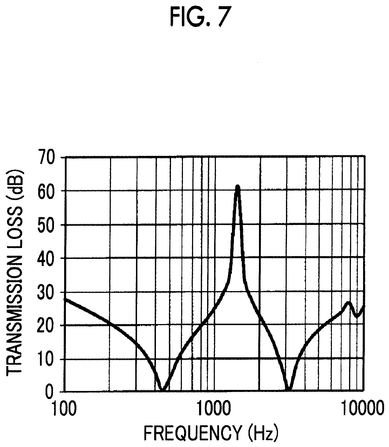

Fig. 7 shows a simulation result of sound insulation performance when a plane wave is incident on the single soundproof cell 18c of the present embodiment based on a finite element method (FEM) to be described later. The soundproof structure 10c of the member in this simulation has the soundproof cell 18c in which the hole portion 12 of the frame 14 has a circular shape with a radius (R) of 5 mm, both the thickness (H) and the width (W) of the frame 14 having the hole portion 12 are 3 mm, the thickness (t) of the film 16 covering the hole portion 12 is 100 $\mu$m, the radius (R') of the weight 26 is 2 mm, and the thickness of the weight 26 is 3 mm. The material of the soundproof member is PMMA.

In such a soundproof structure 10c according to the present embodiment, as shown in Fig. 7, the resonance frequency is 447 Hz, and a first shielding peak with high shielding performance is present at 1413 Hz on the higher frequency side than the resonance frequency.

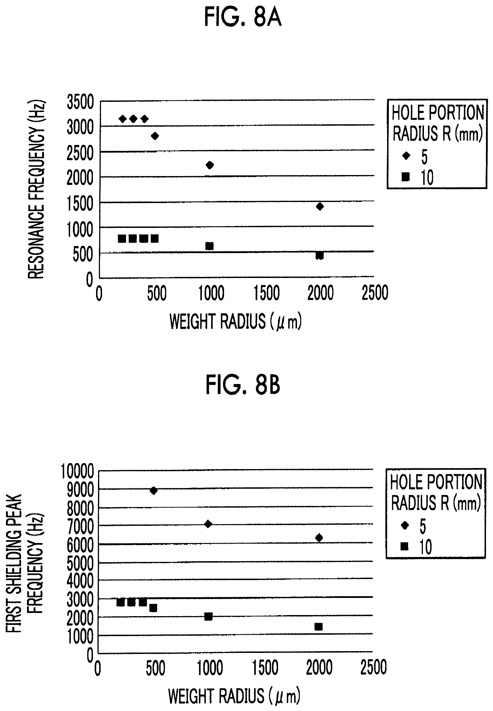

Figs. 8A and 8B show a resonance frequency and a frequency of the first shielding peak when the radius (R'

μm) of the weight 26 and the radius (R mm) of the hole portion 12 are changed. In this manner, by changing the radius (R') of the weight 26 and the radius (R) of the hole portion 12, it is possible to control the resonance frequency and the frequency of the first shielding peak.

Thus, in the soundproof structure 10c according to the present embodiment, by appropriately setting the radius (R') of the weight 26, the radius (R) of the hole portion 12, and the like, it is possible to selectively insulate sound in a required specific frequency band to realize soundproofing.

(Fifth embodiment)

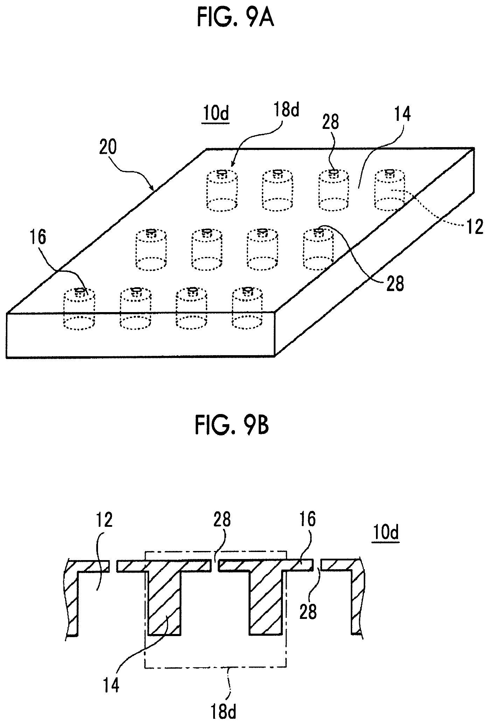

Fig. 9A is a perspective view schematically showing an example of a soundproof structure according to a fifth embodiment not covered by the present invention, and Fig. 9B is a schematic partial cross-sectional view of the soundproof structure shown in Fig. 9A.

A soundproof structure 10d according to the present embodiment shown in Figs. 9A and 9B has a structure in which soundproof cells 18d, each of which has a frame 14 having a hole portion 12, a film 16 fixed to the frame 14, and a through hole 28 drilled in the film 16, are arranged in a two-dimensional manner.

The soundproof structure 10d shown in Figs. 9A and 9B has the same configuration as the soundproof structure 10 shown in Figs. 1A and 1B except that the through hole 28 is drilled in the film 16. Accordingly, the explanation of the same configuration will be omitted.

In the soundproof structure 10d according to the present embodiment, since the through hole 28 is formed in the film 16, it is possible to improve the controllability of sound insulation performance compared with a soundproof structure having no through hole as in the soundproof structure 10 of the first embodiment shown in Figs. 1A and 1B and the soundproof structure 10a of the second embodiment shown in Fig. 4.

That is, by changing the diameter weight of the through hole 28, it is possible to control the frequency of the first sound insulation peak and the sound insulation characteristic.

In the soundproof structure 10d according to the present embodiment, since there is no need to add the weight 24 or 26 unlike in the soundproof structures 10b and 10c of the third and fourth embodiments, it is possible to provide a lighter soundproof structure.

The shape of the through hole 28 is not limited to the circular shape in the illustrated example, and can be the above-described various shapes similarly to the shape of the hole portion 12 of the frame 14, accordingly, the shape of the film 16. However, it is preferable that the shape of the through hole 28 is the same as the shape of the film 16.

The position where the through hole 28 is provided in the film 16 corresponding to the hole portion 12 may be the middle or the center of the soundproof cell 18d or the film 16 for all the through holes 28, or at least some of the through holes 28 may be drilled at positions that are not the center. That is, this is because the sound insulation characteristic of the soundproof structure 10d of the present invention is not changed simply by changing the drilling position of the through hole 28.

In the present embodiment, one through hole 28 may be provided in one film 16 as in the illustrated example, but a plurality of (two or more) through holes 28 may be provided in one film 16. The frequency of the first sound insulation peak and the sound insulation characteristic may be controlled by changing the number of through holes 28 provided in one film 16 instead of changing the diameter of the through hole 28.

In a case where a plurality of through holes 28 are provided in one film 16, a circle equivalent diameter may be calculated from the total area of the plurality of through holes 28, and be used as a size corresponding to one through hole. Alternatively, an area ratio between the total area of the plurality of through holes 28 and the area of the film 16 corresponding to the hole portion 12 may be calculated, and the size of the through hole 28 may be expressed by the area ratio of the through hole 28, that is, the opening ratio.

From the viewpoint of air permeability, it is preferable that the soundproof structure 10d is configured such that each soundproof cell 18d includes one through hole 28. The reason is that, in the case of a fixed opening ratio, the easiness of passage of air as wind is large in a case where one through hole 28 is large and the viscosity at the boundary does not work greatly.

On the other hand, when there is a plurality of through holes 28 in one soundproof cell 18d, the sound insulation characteristic of the soundproof structure 10d of the present invention indicates a sound insulation characteristic corresponding to the total area of the plurality of through holes 28, that is, a corresponding sound insulation peak at the corresponding sound insulation peak frequency. Therefore, it is preferable that the total area of the plurality of through holes 28 in one soundproof cell 18d (or the film 16) is equal to the area of one through hole 28 that is only provided in another soundproof cell 18d (or the film 16). However, the present invention is not limited thereto.

In a case where the opening ratio of the through hole 28 in the soundproof cell 18d (the area ratio of the through hole 28 to the area of the film 16 covering the hole portion 12 (the ratio of the total area of all the through holes 28)) is the same, the same soundproof structure 10 is obtained with the single through hole 28 and the plurality of through holes 28. Accordingly, even if the size of the through hole 28 is fixed to any size, it is possible to manufacture soundproof structures corresponding to various frequency bands.

In the present embodiment, the opening ratio (area ratio) of the through hole 28 in the soundproof cell 18d is not particularly limited, and may be set according to the sound insulation frequency band to be selectively insulated. The opening ratio (area ratio) of the through hole 28 in the soundproof cell 18d is preferably 0.000001% to 70%, more preferably 0.000005% to 5%, and preferably 0.00001% to 30%. By setting the opening ratio of the through hole 28 within the above range, it is possible to determine the sound insulation peak frequency, which is the center of the sound insulation frequency band to be selectively insulated, and the transmission loss at the sound insulation peak.

From the viewpoint of manufacturability, it is preferable that the soundproof structure 10d according to the present embodiment has a plurality of through holes 28 of the same size in one soundproof cell 18d. That is, it is preferable that a plurality of through holes 28 having the same size are drilled in the film 16 of each soundproof cell 18d.

In the soundproof structure 10d, it is preferable that one through hole 28 of each of all the soundproof cells 18d has the same size.

In the present invention, it is preferable that the through hole 28 is drilled using a processing method for absorbing energy, for example, laser processing, or it is preferable that the through hole 28 is drilled using a mechanical processing method based on physical contact, for example, punching or needle processing.

Therefore, if a plurality of through holes 28 in one soundproof cell 18d or one or a plurality of through holes 28 in all the soundproof cells 18d are made to have the same size, in the case of drilling holes by laser processing, punching, or needle processing, it is possible to continuously drill holes without changing the setting of a processing apparatus or the processing strength.

In the soundproof structure 10d of the present invention, the size of the through hole 28 in the soundproof cell 18d (or the film 16) may be different for each soundproof cell 18d (or the film 16). In a case where there are through holes 28 having different sizes for each soundproof cell 18d (or the film 16) as described above, a sound insulation characteristic corresponding to the average area of the areas of the through holes 28, that is, a corresponding sound insulation peak at the corresponding sound insulation peak frequency is shown.

In addition, it is preferable that 70% or more of the through holes 28 of each soundproof cell 18d of the soundproof structure 10d of the present invention are formed as through holes having the same size.

The size of the through hole 28 may be any size as long as the through hole 28 can be appropriately drilled using the above-described processing method. Although the size of the through hole 28 is not particularly limited, the size of the through hole 28 needs to be smaller than the size of the film 16 that is the size of the hole portion 12.

However, from the viewpoint of processing accuracy of laser processing such as accuracy of laser diaphragm, processing accuracy of punching or needle processing, manufacturability such as easiness of processing, and the like, the size of the through hole 28 on the lower limit side thereof is preferably 2 $\mu$m or more, more preferably 5 $\mu$m or more, and most preferably 10 $\mu$m or more.

The upper limit of the size of the through hole 28 needs to be smaller than the size of the frame 14. Therefore, normally, if the size of the frame 14 is set to the order of mm and the size of the through hole 28 is set to the order of $\mu$m, the upper limit of the size of the through hole 28 does not exceed the size of the frame 14. In a case where the upper limit of the size of the through hole 28 exceeds the size of the frame 14, the upper limit of the size of the through hole 28 may be set to be equal to or less than the size of the frame 14.

The size of the through hole 28 is preferably expressed by an average size, for example, in a case where different sizes are included in a plurality of films 16.

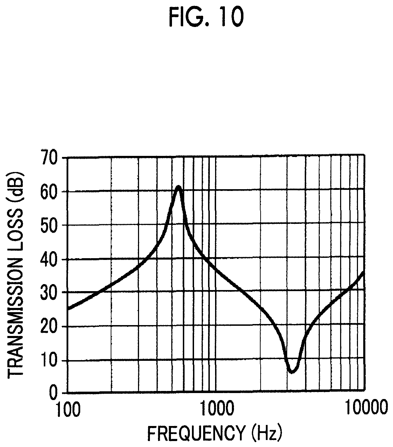

Fig. 10 shows a simulation result of sound insulation performance when a plane wave is incident on the single soundproof cell 18d of the present embodiment based on a finite element method (FEM) to be described later. The soundproof structure 10d of the member in this simulation has the soundproof cell 18d in which the hole portion 12 of the frame 14 has a circular shape with a radius (R) of 5 mm, both the thickness (H) and the width (W) of the frame 14 having the hole portion 12 are 3 mm, the thickness (t) of the film 16 covering the hole portion 12 is 100 $\mu$m, and the radius of the through hole 28 formed at the center of the film 16 is 20 $\mu$m. The material of the soundproof member is PMMA.

In such a soundproof structure 10d according to the present embodiment, as shown in Fig. 10, the resonance frequency is 3162 Hz, and a first shielding peak with high shielding performance is present at 562 Hz on the lower frequency side than the resonance frequency.

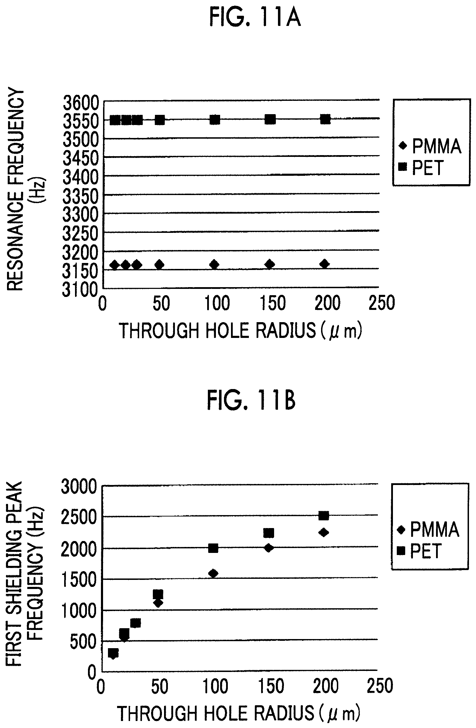

Figs. 11A and 11B show a resonance frequency and a frequency of the first shielding peak when the radius ($\mu$m) of the through hole 28 and the material of the soundproof member are changed. As shown in Fig. 11A, the resonance frequency changes according to the material of the soundproof member. However, if the material of the soundproof member is the same, a change in the resonance frequency is hardly observed even if the radius of the through hole 28 is changed. On the other hand, as shown in Fig. 11B, it can be seen that the difference in the first shielding peak frequency due to the difference in the material of the soundproof member is not so large, but the first shielding peak frequency largely changes according to the radius of the through hole 28.

Thus, in the soundproof structure 10d according to the present embodiment, by appropriately setting the radius ($\mu$m) of the through hole 28, the material of the soundproof member, and the like, it is possible to selectively insulate sound in a required specific frequency band to realize soundproofing.

Incidentally, in the soundproof structure 10d according to the present embodiment, the resonance frequency is determined by the structure configured to include the frame 14 and the film 16, and the first shielding peak frequency at which the transmission loss reaches its peak is determined depending on the through hole 28 drilled in the film 16 of the structure configured to include the frame 14 and the film 16. Therefore, in the soundproof structure 10d, since the resonance frequency is determined by the structure comprising the frame 14 and the film 16, the resonance frequency becomes approximately the same value regardless of the presence or absence of the through hole 28 drilled in the film 16.

In the soundproof structure 10d, since the through hole 28 is drilled in the film 16, a shielding peak of the sound wave whose transmission loss is a peak (maximum) appears at the first shielding peak frequency on the lower frequency side than the resonance frequency.

Accordingly, in the soundproof structure 10d, the shielding (transmission loss) becomes a peak (maximum) at the first shielding peak frequency. As a result, it is possible to selectively insulate sound in a predetermined frequency band having the first shielding peak frequency at its center.

In order to obtain the natural vibration mode of the structure configured to include the frame 14 and the film 16 on the high frequency side, it is preferable to reduce the size of the frame 14.

In addition, in order to prevent sound leakage due to diffraction at the shielding peak of the soundproof cell 18d due to the through hole 28 provided in the film 16, it is preferable that the average size of the frame 14 is equal to or less than the wavelength size corresponding to the first shielding peak frequency.

Therefore, in order to set the primary shielding peak frequency depending on one or more through holes 28 to an arbitrary frequency within the audible range in the structure configured to include the frame 14 and the film 16, it is important to obtain the natural vibration mode on the high frequency side if possible. In particular, this is practically important. For this reason, it is preferable to make the film 16 thick, it is preferable to increase the Young's modulus of the material of the film 16, and it is preferable to reduce the size of the frame 14, accordingly, the size of the film 16. That is, in the present embodiment, these preferable conditions are also important.

Therefore, since the soundproof structure 10d according to the present embodiment complies with the stiffness law, it is preferable that the resonance frequency of the film 16 is set to fall within the above range in order to shield sound waves at frequencies lower than the resonance frequency of the film 16 fixed to the frame 14.

Since the soundproof structure according to the present embodiment is configured as described above, the soundproof structure according to the present embodiment has features that it is possible to perform low frequency shielding, which has been difficult in conventional soundproof structures, and that it is possible to design a structure capable of strongly insulating noise of various frequencies from low frequencies to frequencies exceeding 1000 Hz. In addition, since the soundproof structure according to the present embodiment is based on the sound insulation principle independent of the mass of the structure (mass law), it is possible to realize a very light and thin sound insulation structure compared with conventional soundproof structures. Therefore, the soundproof structure according to the present embodiment can also be applied to a soundproofing target from which it has been difficult to sufficiently insulate sound with the conventional soundproof structures.

The soundproof structure according to the present embodiment has a feature that a weight is not required unlike in the technique disclosed in US7395898B (corresponding Japanese Patent Application Publication: JP2005-250474A) and the soundproof structures according to the third and fourth embodiments and that a sound insulation structure with manufacturability and high robustness as a sound insulation material is obtained simply by providing a through hole in the film. That is, the soundproof structure according to the present embodiment has the following features compared with the technique disclosed in US7395898B (corresponding Japanese Patent Application Publication: JP2005-250474A) and the soundproof structures according to the third and fourth embodiments.

1. Since it is not necessary to use a weight that causes an increase in the mass, it is possible to realize a lighter sound insulation structure.

2. Since a through hole can be drilled in a film quickly and easily by laser processing or punch hole processing, there is manufacturability.

3. Since the sound insulation characteristic hardly depends on the position or the shape of a through hole, stability is high in manufacturing.

4. Since a through hole is present, it is possible to realize a structure that shields sound while making a film have air permeability, that is, while allowing wind or heat to pass through the film.

Basically, the soundproof structures according to the first to fifth embodiments are configured as described above.

Next, a soundproof structure manufacturing method according to the present invention will be described.

(Sixth embodiment)

A soundproof structure manufacturing method according to a sixth embodiment is a method of manufacturing the soundproof structures according to the first, second, fourth, and fifth embodiments and is a method of manufacturing the soundproof structure by injecting a metallic material, such as aluminum, or a resin material, such as acrylic, into a mold having a shape of the soundproof structure and performing compression molding.

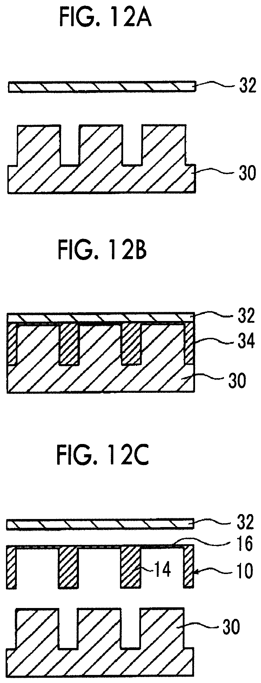

Figs. 12A, 12B, and 12C are partial cross-sectional views schematically showing examples of respective steps of the soundproof structure manufacturing method according to the sixth embodiment of the present invention that is for manufacturing the soundproof structure according to the first embodiment of the present invention.

In the present embodiment, a thermosetting plastic is mentioned as a representative example of the material of the frame 14 and the film 16 of the soundproof structure 10 according to the first embodiment, and a method of manufacturing the soundproof structure 10 from the melted thermosetting plastic by compression molding will be described as a representative example.

First, as shown in Fig. 12A, a mold 30 and a lid 32 are prepared, and the mold 30 and the lid 32 are heated.

Then, melted thermosetting plastic (hereinafter, simply referred to as "plastic") 34 is injected into the heated mold 30, and then the heated lid 32 is pressed against the melted plastic 34 as shown in Fig. 12B. At this time, the thickness of the film 16 is controlled by the pressing amount of the lid 32.

In a state in which the lid 32 is pressed, the mold 30 is cooled to cure the plastic 34. Then, as shown in Fig. 12C, the lid 32 is removed from the plastic 34, and a member of the soundproof structure 10 according to the first embodiment of the present invention that is formed of cured plastic is taken out from the mold 30.

The soundproof structure manufacturing method according to the present embodiment is preferable for mass production.

In the soundproof structure manufacturing method according to the present embodiment, by changing the shapes and the like of the mold 30 and the lid 32, it is possible to manufacture not only the soundproof structures 10a, 10c, and 10d according to the second, fourth, and fifth embodiments of the present invention but also the soundproof member configured to include the frame 14 and the film 16 before attaching and fixing the weight 24 of the soundproof structure 10b according to the third embodiment of the present invention or the soundproof member configured to include the frame 14 and the film 16 before drilling the through hole 28 of the soundproof structure 10d according to the fifth embodiment.

As a method of using a mold, not only compression molding but also injection molding may be used.

Here, in the case of manufacturing the member configured to include the frame 14 and the film 16 before drilling the through hole 28 of the soundproof structure 10d according to the fifth embodiment of the present invention, one or more through holes 28 are drilled in the film 16 of each of the plurality of soundproof cells 18d using a processing method for absorbing energy, such as laser processing, or a mechanical processing method based on physical contact, such as punching or needle processing, thereby forming the through hole 28 in each soundproof cell 18.

In this manner, it is possible to manufacture the soundproof structure 10d according to the fifth embodiment of the present invention.

(Seventh embodiment)

A soundproof structure manufacturing method according to a seventh embodiment of the present invention is a method of manufacturing the soundproof structures according to the first, second, fourth, and fifth embodiments of the present invention, and is a method of manufacturing the soundproof structure by forming the shape of a soundproof structure in a member by imprint molding and curing the member with heat or light.

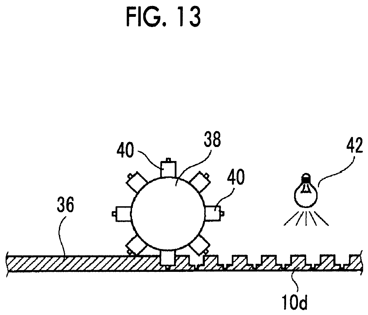

Fig. 13 is a partially cross-sectional view schematically showing an example of the soundproof structure manufacturing method according to the seventh embodiment of the present invention that is for manufacturing the soundproof structure according to the fifth embodiment of the present invention.

In the present embodiment, an ultraviolet (UV) curable resin is mentioned as a representative example of the material of the frame 14 and the film 16 of the soundproof structure 10d, and a method of manufacturing the soundproof structure 10d from the plate-shaped member of the UV curable resin by imprint molding will be described as a representative example.

In the present embodiment, as shown in Fig. 13, the structure of the soundproof structure 10d is transferred to a plate-shaped UV curable resin 36, which flows from a roll (not shown), by a molding form 40 of a molding form roll 38. Then, the UV curable resin 36 to which the structure of the soundproof structure 10d has been transferred is cured by a UV lamp 42, thereby manufacturing the soundproof structure 10d according to the fifth embodiment.

The soundproof structure manufacturing method according to the present embodiment is preferable for mass production since it is possible to manufacture a soundproof structure in a roll to roll manner.

In the soundproof structure manufacturing method according to the present embodiment, by changing the shape and the like of the molding form 40 of the molding form roll 38, it is also possible to manufacture the soundproof structures and the soundproof members according to other embodiments of the present invention similarly to the case of the sixth embodiment.

(Eighth embodiment)

A soundproof structure manufacturing method according to an eighth embodiment is a method of manufacturing the soundproof structures according to the first, second, fourth, and fifth embodiments and the soundproof member according to the third embodiment and the like, and is a method of manufacturing the soundproof structure or the soundproof member by scraping processing from a member of a soundproof structure formed of a metallic material, such as aluminum, or a resin material, such as acrylic.

The soundproof structure manufacturing method according to the present embodiment is not suitable for mass production of soundproof structures, but is preferable for multi-shape small lot production.

(Ninth embodiment)

A soundproof structure manufacturing method according to a ninth embodiment is a method of manufacturing the soundproof structures according to the first, second, fourth, and fifth embodiments and the soundproof member according to the third embodiment and the like, and is a method of manufacturing the soundproof structure or the soundproof member by a processing method using a three-dimensional shape forming (3D) printer, that is, by discharging the melted resin from the 3D printer.

The soundproof structure manufacturing method according to the present embodiment is not suitable for mass production of soundproof structures, but is preferable for multi-shape small lot production.

Basically, the soundproof structure manufacturing method of the present invention is configured as described above.

A method of simulating sound insulation performance when a plane wave is incident on a single soundproof cell of a soundproof structure based on the finite element method (FEM), which can be executed in the present invention, will be described.

Since the system of the soundproof structure of the present invention is an interaction system of film vibration and sound waves in air, analysis was performed using coupled analysis of sound and vibration. Specifically, designing was performed using an acoustic module of COMSOLver 5.0 that is analysis software of the finite element method. First, a resonance frequency was calculated by natural vibration analysis. Then, by performing acoustic structure coupled analysis based on frequency sweep in the periodic structure boundary, transmission loss at each frequency with respect to the sound wave incident from the front was calculated. Based on this design, the shape or the material of the sample was determined. The shielding peak frequency in the experimental result satisfactorily matched the prediction from the simulation.

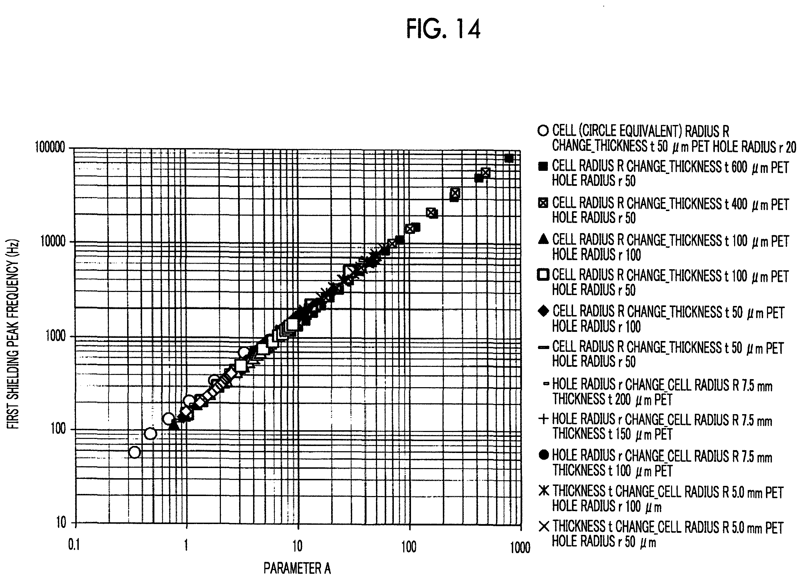

Here, for example, an acoustic structure coupled analysis simulation of the soundproof structure 10d according to the fifth embodiment of the present invention was performed to find the correspondence between the first shielding peak frequency (hereinafter, also simply referred to as a shielding peak frequency) and each physical property. As a parameter A, a shielding peak frequency was calculated by calculating the transmission loss at each frequency with respect to the sound wave by changing the thickness t ($\mu$m) of the film 16, the size (or radius) R (mm) of the hole portion 12, the Young's modulus E (GPa) of the film, and the circle equivalent radius r ($\mu$m) of the through hole 28. As shown in Fig. 14, the present inventors have found that the shielding peak frequency is substantially proportional to $\sqrt{E}$ * ($t^{1.2}$) * (ln(r) - e)/($R^{2.8}$) through this calculation. Accordingly, it was confirmed that the shielding peak frequency could be predicted by expressing the parameter A by Equation (1). It has also been found that the parameter A does not substantially depend on the density of the film 16 or the Poisson's ratio.

$$A = \sqrt{E} * (t^{1.2}) * (\ln(r) - e)/(R^{2.8}) \cdots (1)$$

Here, e is the number of Napier, and ln(x) is the logarithm of x with base e.

Here, it is assumed that, when a plurality of through holes 28 are present in the soundproof cell 18d, the circle equivalent radius r is calculated from the total area of a plurality of opening portions.

Fig. 14 is obtained from the simulation result at the design stage described above.

In the soundproof structure 10 of the present invention, when the resonance frequency is set to 10 Hz to 100000 Hz, the shielding peak frequency is the main fraction equal to or lower than the resonance frequency. Accordingly, Table 1 shows the values of the parameter A corresponding to a plurality of values of the shielding peak frequency from 10 Hz to 100000 Hz.

[Table 1]

| Frequency (Hz) | A parameter |
|---|---|
| 10 | 0.070 |
| 20 | 0.141 |
| 40 | 0.282 |
| 100 | 0.705 |
| 12000 | 91.092 |
| 16000 | 121.456 |
| 20000 | 151.821 |
| 100000 | 759.103 |

As is apparent from Table 1, the parameter A corresponds to the resonance frequency. Therefore, in the present invention, the parameter A is preferably 0.07 to 759.1, more preferably 0.141 to 151.82, even more preferably 0.282 to 121.46, most preferably 0.705 to 91.092.

By using the parameter A standardized as described above, the shielding peak frequency can be determined in the soundproof structure of the present invention, and the sound in a predetermined frequency band having the shielding peak frequency at its center can be selectively insulated. Conversely, by using the parameter A, it is possible to set the soundproof structure of the present invention having the shielding peak frequency that is the center of the frequency band to be selectively insulated.

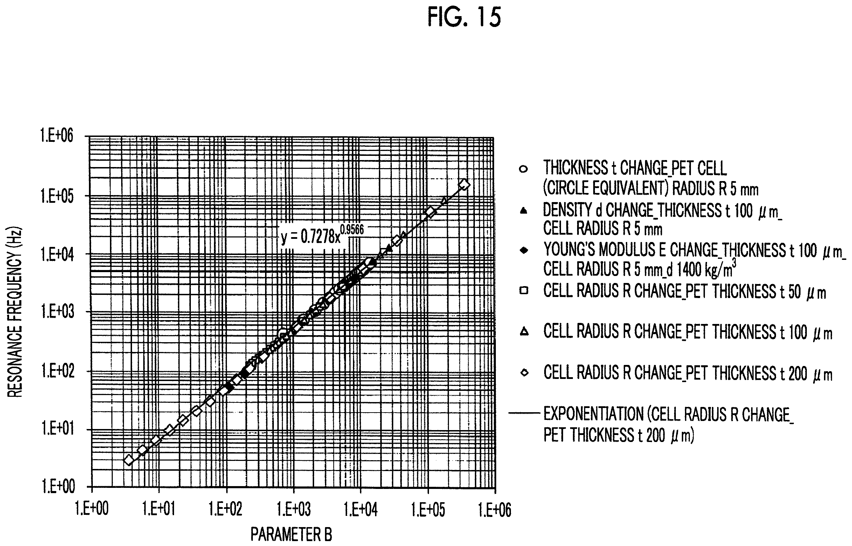

In addition, the correspondence between the resonance frequency of the soundproof structure 10d according to the fifth embodiment of the present invention and each physical property was found by taking advantage of the characteristics of the simulation in which the material characteristics or the film thickness can be freely changed. As a parameter B, natural vibration was calculated by changing the thickness t (m) of the film 16, the size (or radius) R (m) of the hole portion 12, the Young's modulus E (GPa) of the film, and the density d (kg/m$^3$) of the film. As shown in Fig. 15, the present inventors have found that a resonance frequency f_resonance is substantially proportional to $t/R^2 * \sqrt{(E/d)}$ through this calculation. Accordingly, it was confirmed that the natural vibration (resonance frequency) could be predicted by expressing the parameter B by Equation (2). As shown in Fig. 15, it has been found that, when the resonance frequency is expressed as y and the parameter B is expressed as x, the resonance frequency is expressed by Equation (3). In addition, the parameter B does not depend on the through hole 28.

$$B = t/R^2 * \sqrt{(E/d)} \cdots (2)$$

$$y = 0.7278x^{0.9566} \cdots (3)$$

Fig. 13 is obtained from the simulation result at the design stage described above.

From the above, in the soundproof structure 10 of the present invention, by standardizing the circle equivalent radius R (m) of the soundproof cell 18, the thickness t (m) of the film 16, the Young's modulus E (GPa) of the film 16, and the density d (kg/m$^3$) of the film 16 with the parameter B ($\sqrt{m}$), a point representing the relationship between the parameter B and the resonance frequency (Hz) of the soundproof structure 10 on the two-dimensional (xy) coordinates is expressed by the above Equation (3) regarded as a substantially linear equation. Therefore, it can be seen that all points are on substantially the same straight line.

Table 2 shows the values of the parameter B corresponding to a plurality of values of the resonance frequency from 10 Hz to 100000 Hz.

[Table 2]

| Frequency (Hz) | B parameter |
|---|---|
| 10 | 15.47 |
| 20 | 31.94 |

(continued)

| Frequency (Hz) | B parameter |
|---:|---:|
| 40 | 65.92 |
| 100 | 171.79 |
| 12000 | 25615.22 |
| 16000 | 34602.31 |
| 20000 | 43693.00 |
| 100000 | 235013.82 |

As is apparent from Table 2, the parameter B corresponds to the resonance frequency. Therefore, in the present invention, the parameter B is preferably 15.47 to 235010, more preferably 31.94 to 43693, even more preferably 65.92 to 34602, most preferably 171.79 to 25615.

By using the parameter B standardized as described above, the resonance frequency that is an upper limit on the high frequency side of the shielding peak frequency in the soundproof structure of the present invention can be determined, and the shielding peak frequency that is the center of the frequency band to be selectively insulated can be determined. Conversely, by using the parameter B, it is possible to set the soundproof structure of the present invention having a resonance frequency that can have a shielding peak frequency that is the center of the frequency band to be selectively insulated.

In addition, the acoustic characteristics were measured by a transfer function method using four microphones in a self-made aluminum acoustic tube. This method is based on "ASTM E2611-09: Standard Test Method for Measurement of Normal Incidence Sound Transmission of Acoustical Materials Based on the Transfer Matrix Method". As the acoustic tube, for example, an acoustic tube based on the same measurement principle as WinZac manufactured by Nitto Bosei Aktien Engineering Co., Ltd. was used. It is possible to measure the sound transmission loss in a wide spectral band using this method. The soundproof structure of the present invention was disposed in a measurement portion of the acoustic tube, and the sound transmission loss was measured in the range of 100 Hz to 10000 Hz.

The soundproof structure according to the fifth embodiment of the present invention is a soundproof structure having a plurality of soundproof cells arranged in a two-dimensional manner, and is characterized in that each of the plurality of soundproof cells includes a frame having a through opening through which sound passes, a vibratable film fixed to the frame, and an opening portion having one or more through holes drilled in the film, the frame and the film are formed of the same material and are integrally formed, and the soundproof structure has a first shielding peak frequency, which is determined by the opening portions of the plurality of soundproof cells and at which the transmission loss is maximized, on the lower frequency side than the resonance frequency of the film of the plurality of soundproof cells and selectively insulates the sound in a predetermined frequency band having the first shielding peak frequency at its center.

Here, it is preferable that the resonance frequency is determined by the geometric form of the frame of the plurality of soundproof cells and the stiffness of the film of the plurality of soundproof cells and that the first shielding peak frequency is determined according to the area of the opening portions of the plurality of soundproof cells.

In addition, it is preferable that the resonance frequency is determined by the shape and size of the frame of the plurality of soundproof cells and the thickness and flexibility of the film of the plurality of soundproof cells and that the first shielding peak frequency is determined according to the average area ratio of the opening portions of the plurality of soundproof cells.

It is preferable that the resonance frequency is included in a range of 10 Hz to 100000 Hz.

Assuming that the circle equivalent radius of the frame is R (mm), the thickness of the film is t ($\mu$m), the Young's modulus of the film is E (GPa), and the circle equivalent radius of the opening portion is r ($\mu$m), it is preferable that the parameter B expressed by Equation (1) is 0.07 or more and 759.1 or less.

$$B = \sqrt{(E)} * (t^{1.2}) * (\ln(r) - e)/(R^{2.8}) \cdots (1)$$

Here, e indicate shows the number of Napier, and ln(x) is the logarithm of x with base e.

Assuming that the circle equivalent radius of the frame is R (m), the thickness of the film is t (m), the Young's modulus of the film is E (GPa), and the density of the film is d (kg/m$^3$), it is preferable that the parameter A expressed by Equation (2) is 15.47 or more and 235010 or less.

$$A = t/R^2 * \sqrt{(E/d)} \cdots (2)$$

It is preferable that the opening portion of each of the plurality of soundproof cells is formed by one through hole.

It is preferable that the opening portion of each of the plurality of soundproof cells is formed by a plurality of through hole having the same size.

It is preferable that 70% or more of the opening portions of the plurality of soundproof cells are formed by through hole having the same size.

It is preferable that the sizes of one or more through holes of the opening portions of the plurality of soundproof cells are 2 μm or more.

It is preferable that the average size of the frames of the plurality of soundproof cells is equal to or less than the wavelength size corresponding to the shielding peak frequency.

It is preferable that one or more through holes of the opening portions of the plurality of soundproof cells are through holes drilled using a processing method for absorbing energy, and the processing method for absorbing energy is preferably laser processing.

It is preferable that one or more through holes of the opening portions of the plurality of soundproof cells are through holes drilled using a mechanical processing method based on physical contact, and the mechanical processing method is preferably punching or needle processing.

It is preferable that the film is impermeable to air.

It is preferable that one through hole of the opening portion of each soundproof cell is provided at the center of the film.

It is preferable that the film is formed of a flexible elastic material.

It is preferable that the frames of the plurality of soundproof cells are formed by one frame body covering the plurality of soundproof cells.

It is preferable that the films of the plurality of soundproof cells are formed by one sheet-shaped film body covering the plurality of soundproof cells.

The soundproof structure manufacturing method is characterized in that one or more through holes of the opening portions of the plurality of soundproof cells are drilled in the film of each soundproof cell by a processing method for absorbing energy or by a mechanical processing method based on physical contact when manufacturing the soundproof structure according to the fifth embodiment.

It is preferable that the processing method for absorbing energy is laser processing and the mechanical processing method is punching or needle processing.

According to the soundproof structure according to the fifth embodiment of the present invention, any target frequency component can be shielded very strongly by providing a very small through hole in a film structure and a film portion of the stiffness law shielding structure of the frame.

According to the present embodiment, large sound insulation can be done near 1000 Hz, which is generally difficult to shield with a thin and light structure even with the mass law and the stiffness law and which is a region that can be heard largely by the human ear.

According to the present embodiment, it is possible to realize a strong sound insulation structure simply by drilling a through hole in the film.

According to the present embodiment, since a weight that causes an increase in the mass is not required for the sound attenuation panel and the structure disclosed in US7395898B (corresponding Japanese Patent Application Publication: JP2005-250474A), it is possible to realize a lighter sound insulation structure.

According to the present embodiment, since a through hole is present, it is possible to realize a structure that shields sound while making a film have air permeability, that is, while allowing wind or heat to pass through the film.

According to the present embodiment, since a through hole can be formed in a film quickly and easily by laser processing or punch hole processing, there is manufacturability.

According to the present embodiment, since the sound insulation characteristic hardly depends on the position or the shape of a through hole, there is an advantage that stability is high in manufacturing.

While the soundproof structure and the soundproof structure manufacturing method of the present invention have been described in detail with reference to various embodiments and examples, the present invention is not limited to these embodiments and examples, and various improvements or modifications may be made without departing from the scope of the appended claims.

Explanation of References

| 10: | soundproof structure |
|---|---|
| 12, 12a, 12b: | hole portion |
| 14, 14a, 14b, 22: | frame |
| 16: | film |
| 18: | soundproof cell |
| 20: | plate-shaped soundproof member |
| 24, 26: | weight |
| 28: | through hole |
| 30: | mold |
| 32: | lid |
| 34: | thermosetting plastic |
| 36: | ultraviolet (UV) curable resin |
| 38: | molding form roll |
| 40: | molding form |
| 42: | ultraviolet (UV) lamp |

**Claims**

1. A soundproof structure, comprising:

   one or more soundproof cells (18),
   wherein each of the one or more soundproof cells comprises

   a frame (14) having a hole portion (12),
   a vibratable film (16) fixed to the frame (14) so as to cover the hole portion (12), and
   one or more through holes (28) drilled in the film (16),

   both end portions of the hole portion (12) of the frame (14) are not closed, and
   the frame (14) and the film (16) are formed of the same material, and are integrally formed,
   the one or more soundproof cells (18) are a plurality of soundproof cells arranged adjacent in a two-dimensional manner **characterized by**
   a weight (26) disposed in the film,
   wherein the weight is formed of the same material as the film (16), and is integrally formed.

2. The soundproof structure according to claim 1,
   wherein the soundproof structure has a shielding peak frequency, which is determined by opening portions of the one or more soundproof cells and at which transmission loss is maximized, on a lower frequency side than a resonance frequency of the films of the one or more soundproof cells, and selectively insulates sound in a predetermined frequency band having the shielding peak frequency at its center.

3. A soundproof structure manufacturing method, comprising:

   when manufacturing the soundproof structure according to claim 1 or 2, integrally molding the frame and the film by any one of compression molding, injection molding, imprinting, scraping processing, and a three-dimensional shaping printer;
   drilling one or more through holes in the film (16),
   wherein a weight (26) is integrally molded in the film (16) .

4. The soundproof structure manufacturing method according to claim 3,
   wherein one or more through holes are drilled in the film of each of the one or more soundproof cells using a processing method for absorbing energy or a mechanical processing method based on physical contact.

**Patentansprüche**

1. Schalldichte Struktur, umfassend:

eine oder mehrere schalldichte Zellen (18), von denen jede aufweist:

> einen Rahmen (14) mit einem Lochabschnitt (12),
> einen schwingungsfähigen Film (16), der an dem Rahmen (14) derart fixiert ist, dass er den Lochabschnitt (12) abdeckt, und
> ein oder mehrere Durchgangslöcher (28), die in den Film (16) gebohrt sind, wobei beide Endabschnitte des Lochabschnitts (12) des Rahmens (14) nicht geschlossen sind, wobei

der Rahmen (14) und der Film (16) aus dem gleichen Werkstoff und integral ausgebildet sind,
wobei die eine oder mehreren schalldichten Zellen (18) mehrere schalldichte Zellen sind, die einander benachbart in zweidimensionaler Weise angeordnet sind,
**gekennzeichnet durch**
ein in dem Film angeordnetes Gewicht (26),
wobei das Gewicht aus dem gleichen Werkstoff wie der Film (16) und integral ausgebildet ist.

**2.** Schalldichte Struktur nach Anspruch 1,
bei der die schalldichte Struktur eine Abschirm-Spitzenfrequenz aufweist, die sich bestimmt durch Öffnungsabschnitte der einen oder der mehreren schalldichten Zellen, und bei der der Durchgangsverlust maximiert ist, gelegen auf einer niedrigeren Frequenzseite als eine Resonanzfrequenz der Filme der einen oder der mehreren schalldichten Zellen, und die selektiv Schall in einem vorbestimmten Frequenzband mit der Abschirm-Spitzenfrequenz als Zentrum dämmt.

**3.** Verfahren zum Fertigen einer schalldichten Struktur, umfassend:

> beim Fertigen der schalldichten Struktur nach Anspruch 1 oder 2, integriertes Formen des Rahmens und des Films durch Formpressen, Spritzgießen, Prägen, schabende Bearbeitung und dreidimensionales Formdrucken;
> Bohren von einem oder mehreren Durchgangslöchern in den Film (16),
> wobei in dem Film (16) integral ein Gewicht (26) eingeformt wird.

**4.** Verfahren zum Fertigen einer schalldichten Struktur nach Anspruch 3,
bei dem in den Film jeder schalldichten Zelle mit Hilfe eines Bearbeitungsverfahrens zum Absorbieren von Energie oder mittels eines mechanischen Bearbeitungsverfahrens basierend auf physischem Kontakt ein oder mehrere Durchgangslöcher gebohrt werden.

**Revendications**

**1.** Structure d'insonorisation, comprenant :

> une ou plusieurs cellules d'insonorisation (18) ;
> dans laquelle chacune des une ou plusieurs cellules d'insonorisation comprend :

> > un cadre (14) présentant une portion à trou (12) ;
> > un film pouvant vibrer (16) fixé sur le cadre (14) de manière à couvrir la portion à trou (12), et
> > un ou plusieurs trous débouchants (28) percés dans le film (16),

> les deux portions d'extrémité de la portion à trou (12) du cadre (14) ne sont pas fermées, et
> le cadre (14) et le film (16) sont formés dans le même matériau, et sont formés d'un seul tenant,
> les une ou plusieurs cellules d'insonorisation (18) sont une pluralité de cellules d'insonorisation présentant un agencement adjacent et bidimensionnel,
> **caractérisée par**
> un poids (26) disposé dans le film, et
> dans laquelle le poids est formé dans le même matériau que le film (16) et est formé d'un seul tenant.

**2.** Structure d'insonorisation selon la revendication 1,
dans laquelle la structure d'insonorisation présente une fréquence de crête faisant écran, laquelle est déterminée par des portions d'ouverture des une ou plusieurs cellules d'insonorisation et sur laquelle un affaiblissement de transmission est maximisé, sur un côté de fréquence inférieure à une fréquence de résonance des films des une ou plusieurs cellules d'insonorisation, et insonorise de manière sélective dans une bande de fréquences prédéterminée présentant la fréquence de crête faisant écran en son centre.

3. Procédé de fabrication de structure d'insonorisation, comprenant les étapes consistant à :

lors de la fabrication de la structure d'insonorisation selon la revendication 1 ou 2, mouler d'un seul tenant le cadre et le film par une technique parmi un moulage par compression, un moulage par injection, par impression, par un traitement de grattage, et par une imprimante de mise en forme tridimensionnelle ;
percer un ou plusieurs trous débouchants dans le film (16), et
dans lequel un poids (26) est moulé d'un seul tenant dans le film (16).

4. Procédé de fabrication de structure d'insonorisation selon la revendication 3,
dans lequel un ou plusieurs trous débouchants sont percés dans le film dans chacune des une ou plusieurs cellules d'insonorisation à l'aide d'un procédé de traitement pour absorber une énergie ou un procédé de traitement mécanique sur la base d'un contact physique.

## FIG. 1A

## FIG. 1B

FIG. 2

## FIG. 3A

## FIG. 3B

FIG. 4

FIG. 5A

FIG. 5B

FIG. 6A

FIG. 6B

FIG. 7

## FIG. 8A

## FIG. 8B

FIG. 9A

FIG. 9B

FIG. 10

## FIG. 11A

## FIG. 11B

## FIG. 12A

## FIG. 12B

## FIG. 12C

FIG. 13

# FIG. 14

# FIG. 15

EP 3 264 411 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4832245 B
- US 7395898 B
- JP 2005250474 A
- JP 2005031240 A
- US 4257998 A
- US 2011240402 A1